# EUROPEAN PATENT SPECIFICATION

(11) **EP 3 095 339 B1**
(45) Date of publication and mention of the grant of the patent: **27.06.2018**
(21) Application number: 16184035.0
(22) Date of filing: 12.08.2016
(51) Int. Cl.: B65D 25/04, F16J 15/02, A24F 47/00

(54) **ATOMIZING HEAD, ATOMIZER AND ELECTRONIC CIGARETTE HAVING SAME**
ZERSTÄUBUNGSKOPF, ZERSTÄUBER UND ELEKTRONISCHE ZIGARETTE DAMIT
TÊTE D'ATOMISATION, ATOMISEUR ET CIGARETTE ÉLECTRONIQUE COMPORTANT CELUI-CI

(30) Priority: 02.09.2015 CN 201520674089 U
(43) Date of publication of application: 23.11.2016
(73) Proprietor: Shenzhen First Union Technology Co., Ltd., Shenzhen, Guangdong 518104 (CN)
(72) Inventor: LI, Yonghai, Shenzhen, Guangdong 518104 (CN); XU, Zhongli, Shenzhen, Guangdong 518104 (CN); HU, Shuyun, Shenzhen, Guangdong 518104 (CN)
(74) Representative: ProI European Patent Attorneys

(56) References cited:
- EP-A1- 2 732 714
- EP-A2- 2 801 270
- WO-A1-2013/149404
- US-A1- 2015 059 787

## Description

### TECHNICAL FIELD

The present invention relates to an atomizing head, an atomizer and an electronic cigarette using same.

### BACKGROUND ART

A refillable atomizer includes an atomizing head for generating aerosol from tobacco liquid. In a typical refillable atomizer, the atomizing head is fixedly arranged in the atomizer, and is not removable. When the atomizing head is broken, the whole atomizer cannot be used. Accordingly, the cost of smoking is high, and the refillable atomizer is not environmental-friendly.

What are needed, therefore, are an atomizing head, an atomizer and an electronic cigarette using same, which can overcome the above shortcomings. Document WO2013/149404 A1 discloses an atomizing head according to the preamble of claim 1.

### SUMMARY

An exemplary atomizing head includes a main body, an air inlet, an exit pipe, two connecting electrode, a liquid conducting element, and a heating element. The main body defines an atomizing chamber and a through hole. The through hole communicates with the atomizing chamber such that tobacco liquid can flow into the atomizing chamber. The liquid conducting element is configured for absorbing tobacco liquid. The liquid conducting element defines at least one air passage. The heating element is in contact with the liquid conducting element. The heating element is configured for heating the tobacco liquid to form aerosol. The aerosol is expelled via the at least one air passage. Two opposite ends of the heating element are connected to the two connecting electrodes.

### BRIEF DESCRIPTION OF THE DRAWINGS

Many aspects of the present disclosure can be better understood with reference to the following drawings. The components in the drawings are not necessarily drawn to scale, the emphasis instead being placed upon clearly illustrating the principles of the present disclosure. Moreover, in the drawings, like reference numerals designate corresponding parts throughout the several views.
FIG. 1 is a perspective view of an atomizing head according to a first embodiment, including an exit pipe and a liquid conducting element.
FIG. 2 is a side view of the atomizing head of FIG. 1.
FIG. 3 is a cross-sectional view of the atomizing head of FIG. 1.
FIG. 4 is a cross-sectional view of the atomizing head of FIG. 1 when the exit pipe is separated from the other components.
FIG. 5 is a perspective view of the liquid conducting element of the atomizing head of FIG. 1.
FIG. 6 is a side view of an atomizer according to a second embodiment.
FIG. 7 is a cross-sectional view of the atomizer of FIG. 6.
FIG. 8 is a side view of an electronic cigarette according to a third embodiment.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. Also, the description is not to be considered as limiting the scope of the embodiments described herein. The drawings are not necessarily to scale and the proportions of certain parts have been exaggerated to better illustrate details and features of the present disclosure.

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

Several definitions that apply throughout this disclosure will now be presented.

The term "outside" refers to a region that is beyond the outermost confines of a physical object. The term "inside" indicates that at least a portion of a region is partially contained within a boundary formed by the object. The term "substantially" is defined to be essentially conforming to the particular dimension, shape or other word that substantially modifies, such that the component need not be exact. For example, substantially cylindrical means that the object resembles a cylinder, but can have one or more deviations from a true cylinder. The term "comprising," when utilized, means "including, but not necessarily limited to"; it specifically indicates open-ended inclusion or membership in the so-described combination, group, series and the like.

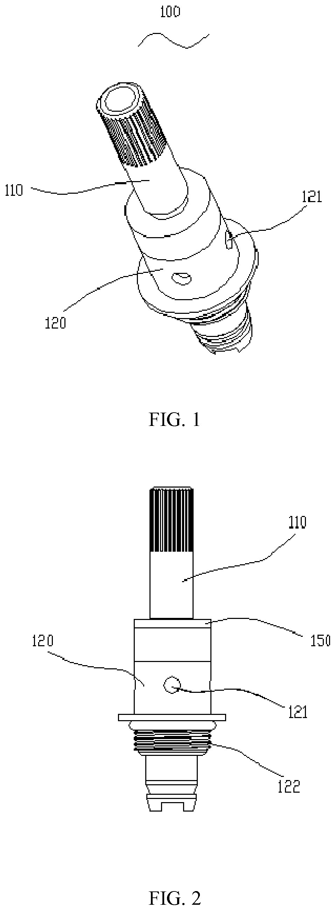

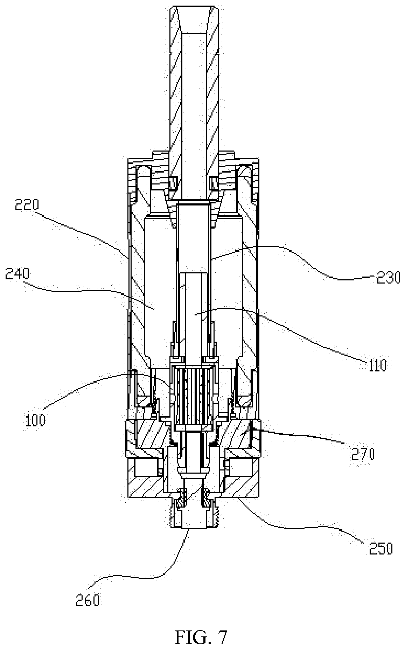

Referring to FIGS.1-3, an atomizing head 100 is shown. The atomizing head 100 is detachably arranged in an atomizer 200 (as seen in FIG. 7). The atomizing head 100 includes a main body 120, an air inlet 131, an exit pipe 110, a first connecting electrode 130 and a second connecting electrode 124. The main body 120 defines an atomizing chamber 123. The main body 120 further defines a through hole 121 so that tobacco liquid can flow into the atomizing chamber 123 via the through hole 121. A liquid conducting element 170 and a heating element 173 are arranged in the atomizing chamber 123. The liquid conducting element 170 is configured (i.e., structured and arranged) for absorbing tobacco liquid. The heating element 173 is in contact with the liquid conducting element 170. The liquid conducting element 170 defines a plurality of air passages 172 communicating the air inlet 131 and the exit pipe 110. The heating element 173 is configured for heating the tobacco liquid to form aerosol. The aerosol passes through the air passage 172, and then flows out from the exit pipe 110.

In the present embodiment, the exit pipe 110 includes an air outlet 111, the air inlet 131 is defined in the first connecting electrode 130, and the second connecting electrode 124 and the main body 120 are integrally formed. The main body 120 includes a plurality of external screws 122, via which the atomizing head 100 is detachably engaged in the atomizer. The atomizing head 100 is further provided with a sealing ring 150 nesting the exit pipe 110.

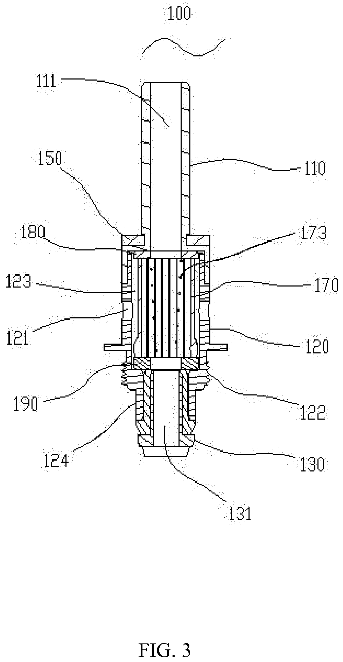

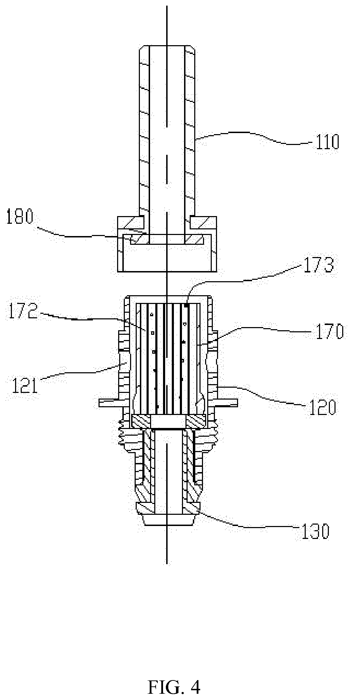

Referring to FIGS. 3-5, the liquid conducting element 170 is cylindrical, and defines a plurality of air passages 172. The liquid conducting element 170 divides the atomizing chamber 123 into two areas. One area is configured for storing tobacco liquid, while the other includes a plurality of air passages 172. A first sealing element 180 and a second sealing element 190 are arranged at two opposite ends of the liquid conducting element 170, and configured for separating the two areas. The liquid conducting element 170 is made of ceramic material. The heating element 173 is arranged in the liquid conducting element 170. Two opposite ends 174, 175 of the heating element 173 are electrically connected to the first connecting electrode 130 and the second connecting electrode 124. The heating element 173 is formed in the liquid conducting element 170 by e.g., sintering. The liquid conducting element 170 absorbs tobacco liquid flowed into the atomizing chamber 123 via the through hole 121. The liquid conducting element 170 can prevent the tobacco liquid from flowing out from the air inlet 131 and air outlet 111.

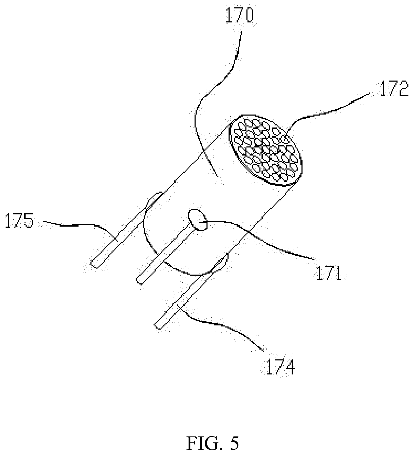

Referring to FIG. 5, a temperature sensor 171 is arranged on a liquid conducting element 170, and configured for sensing a temperature of the liquid conducting element 170. In the present embodiment, the first sealing element 180 and the second sealing element 190 may be made of rubber or silicone.

In the present embodiment, the liquid conducting element 170 defines a plurality of air passages 172, the air from the air inlet 131 flows through the air passage 172, and then flows out from the exit pipe 110. The tobacco liquid flowed into the atomizing chamber is only stored in one of the two areas, and will not flow out through the air passage 172. Therefore, the liquid conducting element 170 can prevent liquid leakage.

In other embodiments, a total number of the air passages may be one or two. In an alternative embodiment, an exterior surface of the liquid conducting element 170 is in contact with an interior surface of the atomizing chamber 123.

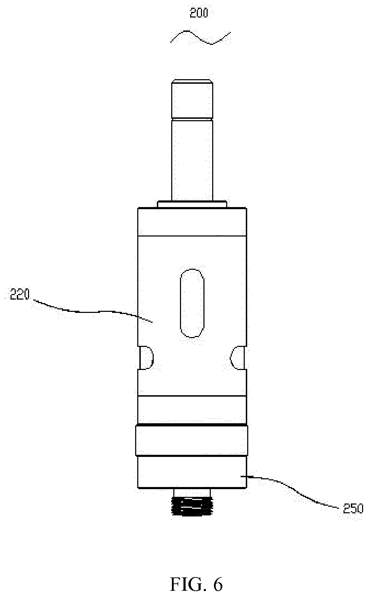

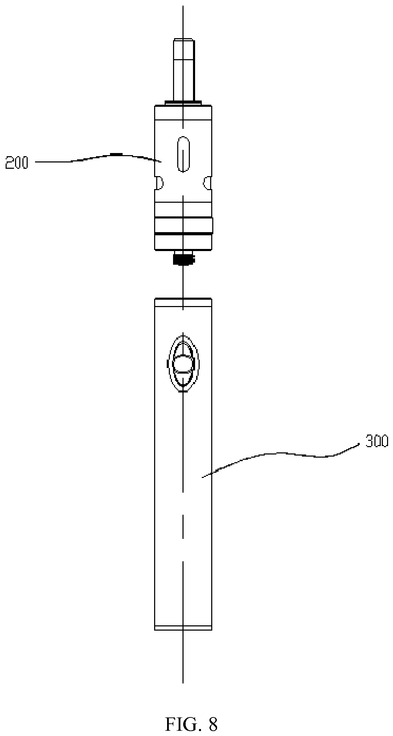

Referring to FIG. 6-7, an atomizer 200 is shown. The atomizer 200 is configured for coupling with a power supply 300 to form an electronic cigarette (as seen in FIG. 8). The atomizer 200 includes a housing 220, a liquid chamber 240, an air pipe 230, the atomizing head 100, and a fixing holder 170. The liquid chamber 240 is adapted for storing tobacco liquid. The tobacco liquid in the liquid chamber 240 flows into the atomizing chamber 123 via the through hole 121 (also referring to FIG. 3). The exit pipe 110 is hermetically connected with the air pipe 230 via the sealing ring 150. The main body 120 is detachably connected with the fixing holder 270 through the external screws 122.

Referring to FIG. 7, the atomizer 200 further includes a first electrode 250 and a second electrode 260. After the atomizing head 100 is assembled with the fixing holder 170, the first electrode 250 and the second electrode 260 are electrically connected to the first connecting electrode 130 and the second connecting electrode 124, respectively.

Referring to FIG. 8, an electronic cigarette is shown. The electronic cigarette includes the above atomizer 200 of the second embodiment and a power supply 300. The atomizer 200 and the power supply 300 are coupled via screw threads. The power supply 300 is configured for supplying the atomizer 200 power.

It is understood that the above-described embodiments are intended to illustrate rather than limit the disclosure. Variations may be made to the embodiments and methods without departing from the scope of the claims.

## Claims

1. An atomizing head (100), comprising:
a main body (120), the main body (120) defining an atomizing chamber (123) and a through hole (121), the through hole (121) communicating with the atomizing chamber (123) such that tobacco liquid can flow into the atomizing chamber (123);
an air inlet (131);
an exit pipe (110) at a first end of the main body (120);
two connecting electrodes (124, 130) arranged at an opposite second end of the main body (120); and a heating element (173) in contact with the liquid conducting element (170), the heating element (173) being configured for heating the tobacco liquid to form aerosol, two opposite ends of the heating element (173) being connected to the two connecting electrodes (124, 130), **characterized in that** the atomizing head (100) further comprises a liquid conducting element (170) configured for absorbing tobacco liquid, the liquid conducting element (170) defining at least one air passage (172), the liquid conducting element (170) being capable of preventing the tobacco liquid from flowing out via the air inlet (131) and the exit pipe (110), the aerosol being expelled via the at least one air passage (172).

2. The atomizing head (100) according to claim 1, wherein the air inlet (131) is defined in the two connecting electrodes (124, 130).

3. The atomizing head (100) according to claim 1, wherein the liquid conducting element (170) divides the atomizing chamber (123) into two areas, one area is configured for storing the tobacco liquid, and the at least one air passage (1720) is defined in the other area.

4. The atomizing head (100) according to claim 3, further comprising a sealing element (180, 190) in the atomizing chamber (123), wherein the sealing element (180, 190) contacts with the liquid conducting element (170), and is configured for separating the two areas.

5. The atomizing head (100) according to claim 1, wherein the liquid conducting element (170) is made of ceramic material, and the heating element (173) is arranged in the liquid conducting element (170).

6. The atomizing head (100) according to claim 1, further comprising a temperature sensor (171) configured for sensing a temperature of the liquid conducting element (170).

7. The atomizing head (100) according to claim 4, wherein the sealing element (180, 190) is made of rubber or silicone.

8. The atomizing head (100) according to claim 1, wherein the two connecting electrodes comprises a first connecting electrode and a second connecting electrode, the air inlet is defined in the first connecting electrode, the second connecting electrode and the main body are integrally formed, and the two opposite ends of the heating element is electrically connected to the first connecting electrode and the second connecting electrode.

9. An atomizer for an electronic cigarette, comprising:
a housing (220);
a liquid chamber (240) in the housing (220), the liquid chamber (240) being configured for storing tobacco liquid;
an air pipe (230);
an atomizing head (100) according to any of claims 1-8; and
a fixing holder configured for connecting the atomizing head (100), the exit pipe (110) being hermetically connected with the air pipe, the main body (120) being detachably connected with the fixing holder.

10. An electronic cigarette, comprising:
an atomizer (200) according to claim 9; and
a power supply (300) configured for supplying the atomizer (200) power.

## Patentansprüche

1. Zerstäuberkopf (100), umfassend:
einen Hauptkörper (120), wobei der Hauptkörper eine Zerstäuberkammer (123) und ein Durchgangsloch (121) definiert, wobei das Durchgangsloch (121) mit der Zerstäuberkammer (123) in Verbindung steht, so dass Tabakflüssigkeit in die Zerstäuberkammer (123) fließen kann;
ein Lufteinlass (131);
ein Austrittsrohr (110) an einem ersten Ende des Hauptkörpers (120);
zwei Verbindungselektroden (124, 130), die an einem gegenüberliegenden zweiten Ende des Hauptkörpers (120) angeordnet sind;
und ein Heizelement (173) in Kontakt mit dem Flüssigkeitsleitelement (170),
wobei das Heizelement (173) zum Erwärmen der Tabakflüssigkeit zur Bildung von Aerosol konfiguriert ist, wobei zwei gegenüberliegende Enden des Heizelements (173) mit den Verbindungselektroden (124, 130) verbunden sind,
**dadurch gekennzeichnet, dass**
der Zerstäuberkopf (100) ferner ein Flüssigkeitsleitelement (170) umfasst, das zum Absorbieren von Tabakflüssigkeit konfiguriert ist, wobei das Flüssigkeitsleitelement (170) wenigstens einen Luftdurchlass (172) definiert,
wobei das Flüssigkeitsleitelement (170) verhindern kann, dass die Tabakflüssigkeit über den Lufteinlass (131) und das Austrittsrohr (110) ausströmt, wobei das Aerosol über den mindestens einen Luftdurchlass (172) ausgestoßen wird.

2. Zerstäuberkopf (100) nach Anspruch 1, wobei der Lufteinlass (131) in den zwei Verbindungselektroden (124, 130) definiert ist.

3. Zerstäubungskopf (100) nach Anspruch 1, wobei das Flüssigkeitsleitelement (170) die Zerstäubungskammer (123) in zwei Bereiche unterteilt, wobei ein Bereich zum Speichern der Tabakflüssigkeit konfiguriert ist und der wenigstens eine Luftdurchlass (1720) in dem anderen Bereich ausgebildet ist.

4. Zerstäuberkopf (100) nach Anspruch 3, der ferner ein Dichtelement (180, 190) in der Zerstäubungskammer (123) aufweist, wobei das Dichtelement (180, 190) mit dem Flüssigkeitsleitelement (170) in Kontakt steht und zum Trennen der zwei Bereiche ausgebildet ist.

5. Zerstäubungskopf (100) nach Anspruch 1, wobei das Flüssigkeitsleitelement (170) aus einem keramischen Material besteht und das Heizelement (173) in dem Flüssigkeitsleitelement (170) angeordnet ist.

6. Zerstäubungskopf (100) nach Anspruch 1, der ferner einen Temperatursensor (171) umfasst, der zum Erfassen einer Temperatur des Flüssigkeitsleitelements (170) konfiguriert ist.

7. Zerstäuberkopf (100) nach Anspruch 4, wobei das Dichtelement (180, 190) aus Gummi oder Silikon besteht.

8. Zerstäubungskopf (100) nach Anspruch 1, wobei die zwei Verbindungselektroden eine erste Verbindungselektrode und eine zweite Verbindungselektrode umfassen, wobei der Lufteinlass in der ersten Verbindungselektrode definiert ist, die zweite Verbindungselektrode und der Hauptkörper einstückig ausgebildet sind, und die beiden gegenüberliegende Enden des Heizelements sind elektrisch mit der ersten Verbindungselektrode und der zweiten Verbindungselektrode verbunden.

9. Zerstäuber für eine elektronische Zigarette, umfassend:
ein Gehäuse (220);
eine Flüssigkeitskammer (240) in dem Gehäuse (220), wobei die Flüssigkeitskammer (240) zum Speichern von Tabakflüssigkeit konfiguriert ist;
ein Luftrohr (230);
ein Zerstäubungskopf (100) gemäß einem der Ansprüche 1-8; und
einen Befestigungshalter, der zum Verbinden des Zerstäubungskopfes (100) konfiguriert ist, wobei das Auslassrohr (110) hermetisch mit dem Luftrohr verbunden ist, wobei der Hauptkörper (120) lösbar mit dem Befestigungshalter verbunden ist.

10. Elektronische Zigarette, umfassend:
einen Zerstäuber (200) gemäß Anspruch 9; und
eine Stromversorgung (300), die zum Zuführen der Leistung des Zerstäubers (200) konfiguriert ist.

## Revendications

1. Tête d'atomisation (100), comprenant :
un corps principal (120), le corps principal (120) définissant une chambre d'atomisation (123) et un trou traversant (121), le trou traversant (121) communiquant avec la chambre d'atomisation (123) de sorte que le liquide de tabac peut s'écouler dans la chambre d'atomisation (123) ;
une entrée d'air (131) ;
un tuyau de sortie (110) au niveau d'une première extrémité du corps principal (120) ;
deux électrodes de liaison (124, 130) disposées au niveau d'une seconde extrémité du corps principal (120) ;
**caractérisée en ce que** la tête d'atomisation (100) comprend en outre un élément de conduite de liquide (170) conçu pour absorber le liquide de tabac,
cet élément de conduite de liquide (170) définissant au moins un passage d'air (172), l'élément de conduite de liquide (170) étant apte à empêcher le liquide de tabac de s'écouler vers l'extérieur au moyen de l'entrée d'air (131) et du tuyau de sortie (110) ; et
un élément chauffant (173) en contact avec l'élément de conduite de liquide (170), l'élément chauffant (173 étant conçu pour chauffer le liquide de tabac pour former un aérosol, l'aérosol étant expulsé au moyen d'au moins un passage d'air (172), deux extrémités opposées de l'élément chauffant (173) étant reliées à deux électrodes de liaison (124, 130).

2. Tête d'atomisation (100) selon la revendication 1, dans laquelle l'entrée d'air (131) est définie dans les deux électrodes de liaison (124, 130).

3. Tête d'atomisation (100) selon la revendication 1, dans laquelle l'élément de conduite de liquide (170) divise la chambre d'atomisation (123) en deux zones, une zone est conçue pour stocker le liquide de tabac et le ou les passages d'air (1720) sont définis dans l'autre zone.

4. Tête d'atomisation (100) selon la revendication 3, comprenant en outre un élément d'étanchéité (180, 190) dans la chambre d'atomisation (123), dans laquelle l'élément d'étanchéité (180, 190) entre en contact avec l'élément de conduite de liquide (170) et est conçu pour séparer les deux zones.

5. Tête d'atomisation (100) selon la revendication 1, dans laquelle l'élément de conduite de liquide (170) est fabriqué en un matériau céramique et l'élément chauffant (173) est disposé dans l'élément de conduite de liquide (170).

6. Tête d'atomisation (100) selon la revendication 1, comprenant en outre un capteur de température (171) conçu pour détecter une température de l'élément de conduite de liquide (170).

7. Tête d'atomisation (100) selon la revendication 4, dans laquelle l'élément d'étanchéité (180, 190) est fabriqué en caoutchouc ou en silicone.

8. Tête d'atomisation (100) selon la revendication 1, dans lequel les deux électrodes de liaison comprennent une première électrode de liaison et une seconde électrode de liaison, l'entrée d'air est définie au niveau de la première électrode de liaison, la seconde électrode de liaison et le corps principal sont intégralement formés et les deux extrémités opposées de l'élément chauffant sont électriquement reliées à la première électrode de liaison et à la seconde électrode de liaison.

9. Atomiseur destiné à une cigarette électronique, comprenant :
un boîtier (220) ;
une chambre de liquide (240) dans le boîtier (220), la chambre de liquide (240) étant conçue pour stocker le liquide de tabac ;
une entrée d'air (230) ;
Tête d'atomisation (100) selon l'une quelconque des revendications 1 à 8 ; et
un support de fixation conçu pour relier la tête d'atomisation (100), le tuyau de sortie (110) étant hermétiquement relié avec le tuyau d'air, le corps principal (120) étant relié de manière détachable avec le support de fixation.

10. Cigarette électronique , comprenant :
un atomiseur (200) selon la revendication 9 ; et
une alimentation électrique (300) conçue pour fournir l'alimentation de l'atomiseur (200).
